# EUROPÄISCHE PATENTANMELDUNG

(11) **EP 2 184 193 A1**
(43) Veröffentlichungstag der Anmeldung: **12.05.2010**
(21) Anmeldenummer: 09013896.7
(22) Anmeldetag: 05.11.2009
(51) Int. Cl.: B60J 7/12

(54) **Faltverdeck für einen Personenkraftwagen**

(30) Priorität: 07.11.2008 DE 102008058353
(71) Anmelder: Magna Car Top Systems GmbH, 74321 Bietigheim-Bissingen (DE)
(72) Erfinder: Zehnder, Frank, 71282 Hemmingen (DE)

(57) **Zusammenfassung**

Dieses Faltverdeck (10) ist für einen Personenkraftwagen mit einem Verdeckbezug (13) und einem diesen bewegbaren Verdeckgestänge (14) geeignet, das den Verdeckbezug (13) zwischen einer Schließstellung (Schst) und einer Offenstellung verstellt und in einem rückwärtigen Bereich des Faltverdecks (10) einen Spannbügel (16) zur Straffung des Verdeckbezugs (13) aufweist, welcher Spannbügel (16) von oben gesehen in etwa U-förmige Gestalt besitzt und an freien Enden mittels Lagern (22,23) angelenkt ist.

Um dieses Faltverdeck (10) zu optimieren versetzen die Lager (22,23) unter Vermittlung eines Lenkersystems (24) den Spannbügel (16) beim Verstellen des Faltverdecks (10) zwischen Schließstellung (Schst) und Offenstellung in translatorische und rotatorische Bewegungen (Bt,Br).

## Beschreibung

Die Erfindung bezieht sich auf ein Faltverdeck für einen Personenkraftwagen mit einem Verdeckbezug und einem diesen bewegbaren Verdeckgestänge nach dem Oberbegriff des Patentanspruchs 1.

Es ist ein Verdeck für ein Cabriolet-Fahrzeug bekannt, DE 10 2007 014 193 A1, das von einem einen Fahrgastraum überdeckenden, geschlossenen Zustand in einen den Fahrgastraum freigebenden, offenen Zustand bewegbar ist und vice versa. Im offenen Zustand ist das Verdeck hinter Fahrzeugsitzen in einem Aufbewahrungsraum abgelegt. Das Verdeck weist einen Verdeckbezug auf, der von einem Gestänge getragen wird. In einem hinteren Bereich des Verdecks ist ein Stoffhaltebügel vorgesehen, der oberhalb eines unteren Rands einer Heckscheibe schwenkbar an einer Karosserie des Fahrzeugs gelagert ist. Der Verdeckbezug wird im geschlossenen Zustand des Verdecks mittels des Stoffhaltebügels gespannt.

Aus der DE 20 2008 006 525 U1 geht ein Cabriolet-Fahrzeug mit einem Stoffverdeck hervor, das von einer geschlossenen Position in eine geöffnete Position und umgekehrt verlagerbar ist. Das Stoffverdeck ist mit einem Bezugsstoff versehen, der in der geschlossenen Position dieses Stoffverdecks mittel eines Spannbügels in einer konstruktiv festgelegten Form gehalten wird. Hierzu ist der Spannbügel an freien Enden benachbart von Längsseiten eines Aufbaus des Fahrzeugs gelenkig gelagert.

In der DE 10 2007 015 652 A1 wird eine variable Verdeckkastenanordnung behandelt. Ein Gestänge für ein Faltverdeck mit Verdeckbezug eines Cabriolet-Fahrzeugs weist in einem hinteren Bereich einen Verderkkastenbügel auf, der von oben gesehen eine U-förmige Gestalt mit Querteil und sich in Fahrzeuglängsrichtung erstreckenden Längsteilen besitzt. An freien Enden der Längsteile ist der Verdeckstoffhaltebügel schwenkbeweglich gelagert.

Es ist Aufgabe der Erfindung ein Faltverdeck für einen Personenkraftwagen mit einem Verdeckbezug und einem einen Spannbügel aufweisenden Verdeckgestänge zu schaffen, welcher Spannbügel sich bei Verstellung des Faltverdecks durch funktionsgerechte Bewegungsabläufe auszeichnet. Dabei sollte aber auch der Spannbügel mit Lagern zusammenwirken, die konstruktiv einfach und leicht realisierbar sind.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Spannbügel mittels des Lenkersystems gezielt in translatorische und rotatorische Bewegungen versetzbar ist, wodurch besagter Spannbügel in der Schließstellung eine sichere Spannfunktion und in der Offenstellung eine Raum gewinnende Lage d.h. abgesenkte Lage, z.B. am Boden eines Verdeckkastens, einnimmt. Das je Fahrzeuglängsseite vorgesehene Lenkersystem ist eine an sich vorhandene Viergelenkhebelvorrichtung, mit der Hauptlenker des Verdeckgestänges zwischen Schließstellung und Offenstellung bewegt werden. Zwischen Viergelenkhebelvorrichtung und dem Spannbügel sind auf einfache Weise realisierbare Koppellenker wirksam, wovon jeder musterhaft einerseits mit einer ersten Schwenkachse an der Viergelenkvorrichtung und andererseits mit einer zweiten Schwenkachse an einer Lenkerkonsole des Spannbügels angelenkt ist. Dass die Lenkerkonsole mit einem Lenkerabschnitt und einem Halteabschnitt versehen ist, trägt zu einer aufwandsarmen Lösung bei, die im Zusammenhang mit der Spannbügelkonsole eine vorbildliche Konstruktion darstellt. Schließlich sind die Lenkerkonsole und die Spannbügelkonsole über Schrauben miteinander verbunden, wobei zur Justierung des Spannbügels, z.B. bei der Montage des Faltverdecks, die Lagerkonsole und die Spannbügelkonsole einstellbar zueinander ausgebildet sind.

In der Zeichnung wird ein Ausführungsbeispiel der Erfindung gezeigt, das nachstehend näher erläutert wird.

### Es zeigen

Fig. 1 eine schematische Schrägansicht von vorne links oben auf einen Personenkraftwagen mit einem Faltverdeck,
Fig. 2 eine schematische Schrägansicht von hinten links oben auf das Faltverdeck,
Fig. 3 eine Schrägansicht von hinten links oben auf ein Gestänge des Faltverdecks mit einer Heckscheibe,
Fig. 4 eine Schrägansicht von hinten rechts oben auf ein erstes Ende eines Spannbügels mit einem Koppellenker und Lager eines Lenkersystems,
Fig. 5 eine Schrägansicht von vorne links auf das erste Ende des Spannbügels mit dem Koppellenker,
Fig. 6 eine Ansicht etwa in Pfeilrichtung A der Fig. 3,
Fig. 7 eine Schrägansicht auf ein zweites Ende des Spannbügels mit einem Lenkersystem.

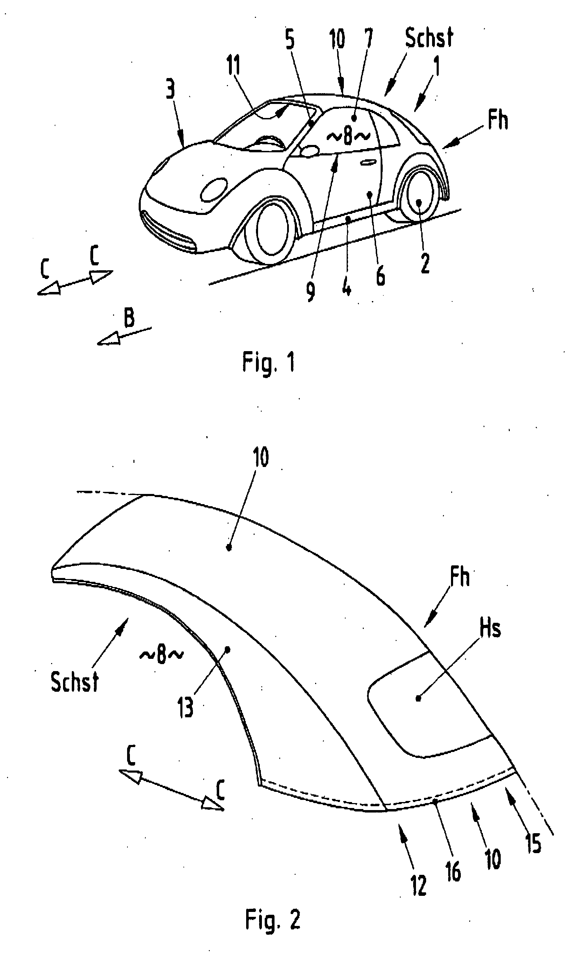

Ein Personenkraftwagen 1 weist einen von Rädern 2 getragenen Aufbau 3 mit einem Grundkörper 4 auf, der einen Windschutzschelbenrahmen 5 und Türen 6 mit Türscheiben 7 umfasst. Ein Fahrgastraum 8 des Aufbaus 3 wird oberhalb einer etwa horizontal verlaufende Gürtellinie 9 von einem Faltverdeck 10 überspannt, das einerseits an einem oberen Querrahmen 11 des Windschutzscheibenrahmens 5 -Fig. 1- und andererseits an einem hinteren Abschlussbereich 12 des Faltverdecks 10 -Fig. 2- befestigt ist sowie zwischen einer Schließstellung Schst und einer Offenstellung -nicht gezeigt- beweglich ist. Dabei wirkt ein Verdeckbezug 13 des mit einer Heckscheibe Hs versehenen Faltverdecks 10 mit einem Verdeckgestänge 14 zusammen, das in Fahrtrichtung B betrachtet- in einem rückwärtigen Bereich 15 einen Spannbügel 16 umfasst.

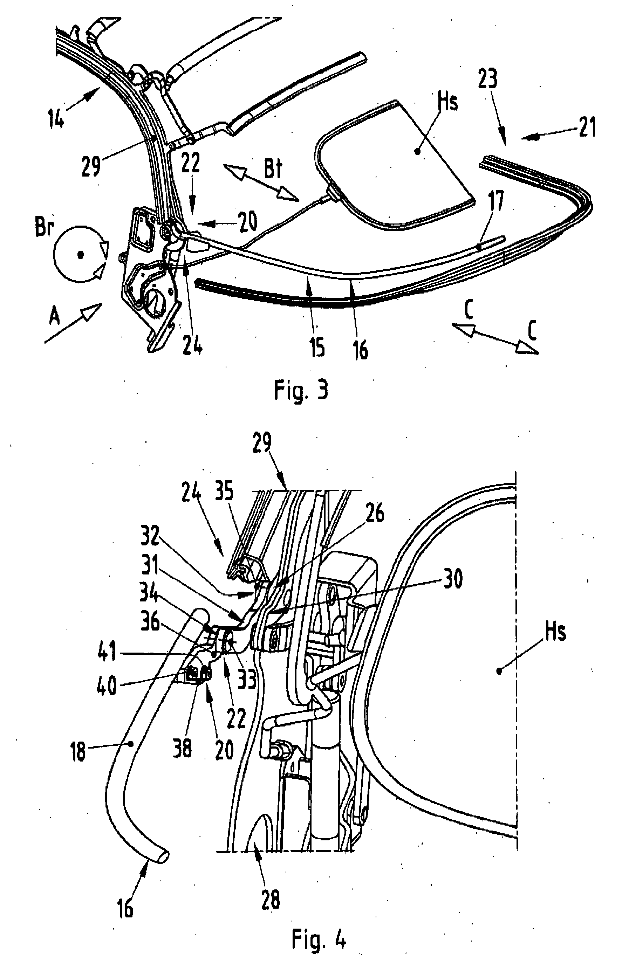

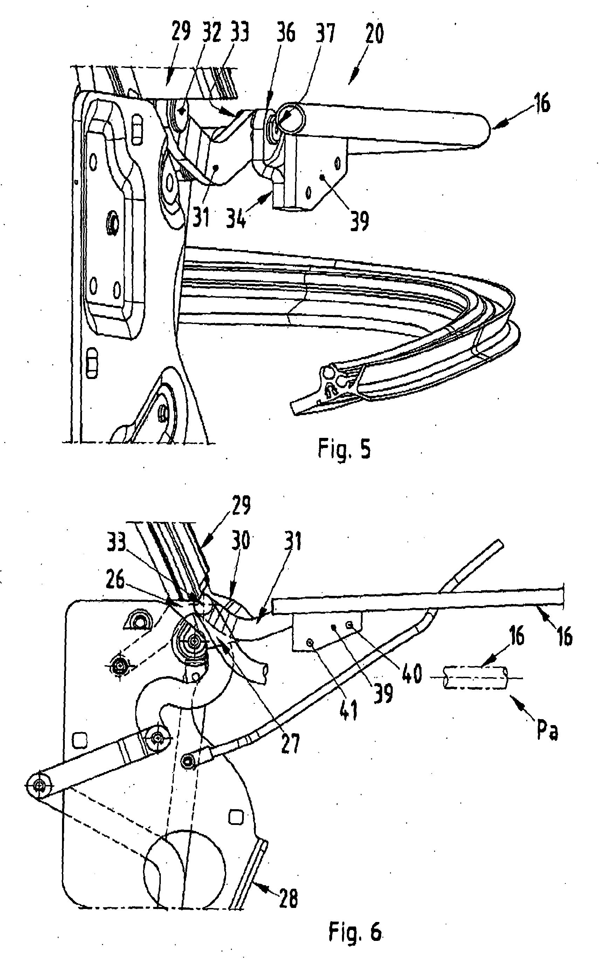

Der Spannbügel 16 dient zur Straffung des Verdeckbezugs 13 in der Schließstellung Schst des Faltverdecks 10 und weist von oben gesehen eine U-förmige Gestalt mit einem Querteil 17 und sich in Fahrzeuglängsrichtung C-C erstreckenden Längsteilen 18 und 19 auf. An freien Enden 20 und 21 ist der schwenkbewegliche Spannbügel 16 mittels Lager 22 und 23 angelenkt. Jedes Lager -z.B. 22- ist unter Vermittlung eines Lenkersystems 24 derart ausgebildet, dass der Spannbügel 16 beim Verstellen des Faltverdecks 10 zwischen Schließstellung Schst und Offenstellung tranlatorische Bewegungen Bt und rotatorische Bewegungen Br ausführt -Fig. 3-. Dabei nimmt der Spannbügel 16 in der Offenstellung des Faltverdecks 10 gegenüber der Schließstellung Schst von letzterem eine abgesenkte Position Pa ein -Fig. 6-.

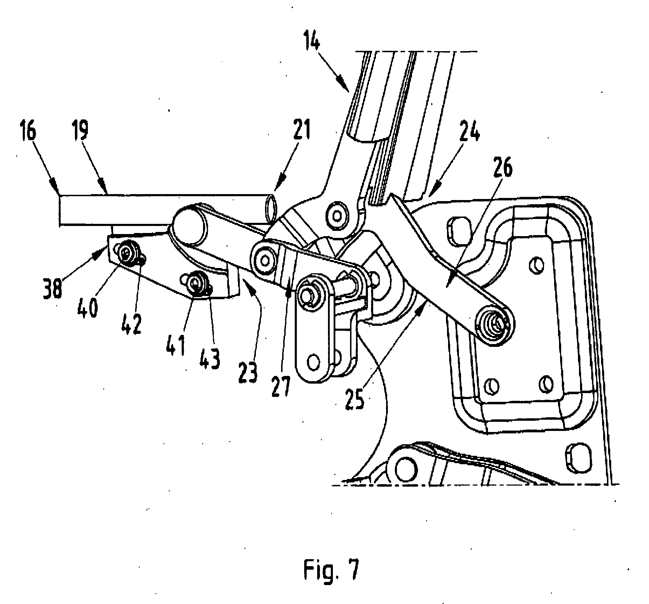

Jedes Lenkersystem 24 ist ein an sich vorhandenes, und zwar zum Bewegen von Hauptlenkern des Verdeckgestänges 14, und es ist als eine Vlergelenkhebelvorrichtung 25 mit einem ersten Hebel 26 und einem zweiten Hebel 27 ausgeführt -Fig. 6 und 7-. Der erste Hebel 26 ist an einem Hauptlager 28 sowie an einer zu besagten Hauptlenkern zählenden C-Säule 29 gelagert: der zweite Hebel 27 am Hauptlager 28 und einer Verlängerung 30 der C-Säule 29. Diese Viergelenkhebelvorrichtung 25 bzw. der erste Hebel 26 ist unter Zwischenschaltung eines Koppellenkers 31 mit dem Spannbügel 16 verbunden. Dabei ist der Koppellenker 31 zum einen an einer ersten Schwenkachse 32 der Viergelenkhebelvorrichtung 26 und zum anderen an einer zweiten Schwenkachse 33 einer Lenkerkonsole 34 des Spannbügels 16 angelenkt. Die erste Schwenkachse 32 des Koppellenkers 31 verläuft koaxial zu einem Lagerzapfen 35 des ersten Hebels 26 der Viergelenkhebelvorrichtung 25, welcher Lagerzapfen 35 den ersten Hebel 26 und die C-Säule 29 miteinander verbindet.

Die Lenkerkonsole 34 ist im Wesentlichen ein flaches Bauteil mit einem Lenkerabschnitt 36 mit einer Bohrung 37 zur Aufnahme der zweiten Schwenkachse 33 und einem plattenförmigen Halteabschnitt 38. Der plattenförmige Halteabschnitt 38 wird an einer ebenfalls plattenförmigen Spannbügelkonsole 39 in Lage gehalten. Hierzu sind zur Verbindung zwischen Halteabschnitt 38 der Lenkerkonsole 34 und der Spannbügelkonsole 39 Schrauben 40 und 41 vorgesehen, die Durchgangsöffnungen 42 und 43 im Halteabschnitt 38 und der Lenkerkonsole 34 durchdringen -Fig. 7-. Die Durchgangsöffnungen 42 und 43 sind so bemessen, dass der Halteabschnitt 38 bzw. die Lenkerkonsole 34 relativ zur Spannbügelkonsole 39 bzw. zum Spannbügel 16 verstellbar ist.

Der Spannbügel 16 besitzt einen rohrförmigen Querschnitt, an dem -in Längsrichtung des Spannbügels gesehen- die Spannbügelkonsole 39 gehalten ist. Schließlich bestehen der Spannbügel 16 und die Spannbügelkonsole 39 aus einem metallischen Werkstoff, und sie sind durch Fügen, vorzugsweise Schweißen miteinander verbunden.

## Patentansprüche

1. Faltverdeck für einen Personenkraftwagen mit einem Verdeckbezug und einem diesen bewegbaren Verdeckgestänge, das den Verdeckbezug zwischen einer Schließstellung und einer Offenstellung verstellt und in einem rückwärtigen Bereich des Faltverdecks einen Spannbügel zur Straffung des Verdeckbezugs aufweist, welcher Spannbügel von oben gesehen in etwa eine U-förmig Gestalt besitzt und an freien Enden mittels Lagern angelenkt ist, **dadurch gekennzeichnet, dass** die Lager (22 und 23) unter Vermittlung eines Lenkersystems (24) den Spannbügel (16) beim Verstellen des Faltverdecks (10) zwischen Schließstellung (Schst) und Offenstellung in translatorische und rotatorische Bewegungen (Bt und Br) versetzen.

2. Faltverdeck nach Anspruch 1, **dadurch gekennzeichnet, dass** der Spannbügel (16) in der Offenstellung des Faltverdecks (10) eine gegenüber der Schließstellung (Schst) abgesenkte Position (Pa) aufweist.

3. Faltverdeck nach den Ansprüchen 1 und 2, **dadurch gekennzeichnet, dass** das Lenkersystem (24) zum Bewegen von Hauptlenkern (z.B. C-Säulen 29) des Verdeckgestänges (14) ausgebildet ist.

4. Faltverdeck nach Anspruch 3, **dadurch gekennzeichnet, dass** das Lenkersystem (24) als Viergelenkhebelvorrichtung (25) ausgeführt ist.

5. Faltverdeck nach Anspruch 4, **dadurch gekennzeichnet, dass** die Viergelenkhebelvorrichtung (25) unter Vermittelung eines Koppellenkers (31) mit dem Spannbügel (16) verbunden ist.

6. Faltverdeck nach den Ansprüchen 1 und 5, **dadurch gekennzeichnet, dass** der Koppellenker (16) einerseits mit einer ersten Schwenkachse (32) an der Viergelenkhebelvorrichtung (25) und andererseits mit einer zweite Schwenkachse (33) an einer Lenkerkonsole (34) des Spannbügels (16) angelenkt ist.

7. Faltverdeck nach Anspruch 6, **dadurch gekennzeichnet, dass** die erste Schwenkachse (32) des Koppellenkers (31) koaxial zu einem Lagerzapfen (35) der Viergelenkhebelvorrichtung (25) angeordnet ist.

8. Faltverdeck nach Anspruch 6, **dadurch gekennzeichnet, dass** die Lenkerkonsole (34) einen Lenkerabschnitt (36) zur Aufnahme der zweiten Schwenkachse (33) und einen plattenartigen Halteabschnitt (38) aufweist.

9. Faltverdeck nach Anspruch 8, **dadurch gekennzeichnet, dass** die Lenkerkonsole (34) mit ihrem plattenförmigen Halteabschnitt (38) an einer plattenförmigen Spannbügelkonsole (39) in Lage gehalten wird.

10. Faltverdeck nach Anspruch 9, **dadurch gekennzeichnet, dass** zur Verbindung zwischen Halteabschnitt (38) der Lenkerkonsole (34) und Spannbügelkonsole (39) Schrauben (40 und 41) vorgesehen sind.

11. Faltverdeck nach Anspruch 10, **dadurch gekennzeichnet, dass** der Halteabschnitt (38) der Lenkerkonsole (34) und die Spannbügelkonsole (39) einstellbar zueinander ausgebildet sind.

12. Faltverdeck nach einem oder mehreren der vorangehenden Ansprüche, **dadurch gekennzeichnet, dass** der Spannbügel (16) zumindest bereichsweise einen rohrförmigen Querschnitt aufweist, an dem die Spannbügelkonsole (39) gehalten ist.

13. Faltverdeck nach Anspruch 12, **dadurch gekennzeichnet, dass** die Spannbügelkonsole (3) und der Spannbügel (16) aus metallischem Werkstoff bestehen und durch Fügen, vorzugsweise Schweißen miteinander verbunden sind.
